# EUROPÄISCHE PATENTSCHRIFT

(11) **EP 2 729 628 B1**
(45) Veröffentlichungstag und Bekanntmachung des Hinweises auf die Patenterteilung: **21.10.2015**
(21) Anmeldenummer: 12730990.4
(22) Anmeldetag: 03.07.2012
(51) Int. Cl.: E02D 29/14

(54) **SCHACHTABDECKUNG**
MANHOLE COVER
COUVERCLE D'UN REGARD DE CHAUSSÉE

(30) Priorität: 04.07.2011 DE 102011051545
(43) Veröffentlichungstag der Anmeldung: 14.05.2014
(73) Patentinhaber: ACO Severin Ahlmann GmbH & Co. KG, 24768 Rendsburg (DE)
(72) Erfinder: STOLTENBERG, Arne, 24782 Büdelsdorf (DE)
(74) Vertreter: Bohnenberger, Johannes
(86) Internationale Anmeldenummer: PCT/EP2012/062898
(87) Internationale Veröffentlichungsnummer: WO 2013/004688

(56) Entgegenhaltungen:
- WO-A1-2005/111318
- US-A1- 2009 290 934

## Beschreibung

Die Erfindung betrifft eine Schachtabdeckung mit einer Tragstrukturvorrichtung gemäß Patentanspruch 1 und ein Verfahren zum Herstellen einer Schachtabdeckung gemäß Patentanspruch 15.

Aus dem Stand der Technik sind Schachtabdeckungen mit Tragstrukturen bekannt, die eine Mehrzahl von (radial) verlaufenden Kraftverteitungsrippen aufweisen, die zur Kraftverteilung in einen Kraftverteilungsring münden. So z.B zeigt die WO 2005/111318 A1 eine Schachtabdeckung nach den Oberbegriff des Anspruch 1. Der Kraftverteilungsring ist zur Lastabtragung von einem Ring aus einem hochfesten Werkstoff, z.B. Metall, umgeben, um ein Versagen der Tragstruktur bzw. der Schachtabdeckung bei Belastung zu verhindern. Nachteilig an bisher bekannten Schachtabdeckungen bzw. Schachtabdeckungen mit Tragstrukturen ist, dass sie technisch sehr aufwändig sind. Zudem ist das Gewicht der Schachtabdeckung bzw. der Schachtabdeckung mit Tragstruktur sehr hoch. Darüber hinaus ist die Tragkraft der Schachtabdeckung bzw. der Schachtabdeckung mit Tragstruktur recht niedrig.

Der Erfindung liegt die Aufgabe zu Grunde, eine Schachtabdeckung mit einer Tragstrukturvorrichtung aufzuzeigen, die bei zumindest gleich großer Tragkraft technisch weniger aufwändig ist.

Diese Aufgabe wird durch eine Schachtabdeckung mit einer Tragstrukturvorrichtung nach Anspruch 1 und ein Verfahren zum Herstellen einer Schachtabdeckung nach Patentanspruch 15 gelöst.

Insbesondere wird die Aufgabe durch eine Schachtabdeckung mit einer Tragstrukturvorrichtung gelöst umfassend Kraftverteilungsrippen zum Tragen einer überfahrbaren Deckfläche der Schachtabdeckung, und einen im Wesentlichen mittig angeordneten, vorzugsweise hohlen, Kraftverteilungszylinder, insbesondere Kraftverteilungskreiszylinder, zur Abstützung der Kraftverteilungsrippen, gekennzeichnet durch eine Kraftverteilungsplatte zur Entlastung des Kraftverteilungszylinders, wobei die Kraftverteilungsplatte eine Unterseite des Kraftverteilungszylinders gegenüber der Deckfläche mindestens im Wesentlichen vollständig bedeckt, und wobei die Kraftverteilungsrippen in die Kraftverteilungsplatte fließend übergehen.

Ein wesentlicher Punkt der Erfindung besteht darin, dass die Schachtabdeckung eine Kraftverteilungsplatte unterhalb des Kraftverteilungszylinders aufweist, in die die Vielzahl von Kraftverteilungsrippen münden bzw. fließend übergehen. Die Kraftverteilungsplatte entlastet den Kraftverteilungszylinder. Ein Vorteil hiervon ist, dass die Schachtabdeckung bei zumindest gleich großer Tragkraft technisch weniger aufwändig ist. Zudem benötigt die Schachtabdeckung weniger Material für die Herstellung. Die Schachtabdeckung weist bei zumindest gleich großer Tragkraft ein geringeres Gewicht auf.

Ein einer Ausführungsform sind zwei oder mehrere der nachfolgenden Teile einstückig miteinander verbunden, nämlich die Kraftverteilungsrippen, die Kraftverteilungsplatte und der Kraftverteilungszylinder. Ein Vorteil hiervon ist, dass eine noch bessere Kraftübertragung gewährleistet wird. Zudem sinkt der technische Aufwand für die Herstellung.

In einer weiteren Ausführungsform umfasst die Schachtabdeckung einen, insbesondere kreisringförmigen, Außenrahmen zum Auflagern der Schachtabdeckung auf einem Untergrund, wobei der Außenrahmen im Wesentlichen entlang des Außenumfangs der Schachtabdeckung verläuft. Hierdurch kann die Schachtabdeckung technisch einfach aufgelagert werden.

In einer weiteren Ausführungsform ist der Außenrahmen mit den Kraftverteilungsrippen einstückig ausgebildet. Hierdurch sinkt der Herstellungsaufwand weiter. Zudem wird die Kraftübertragung von den Kraftverteilungsrippen in den Außenrahmen verbessert.

Die Schachtabdeckung kann aus einem Material bestehen, das längliche Füllstoffe und/oder Fasern zur Erhöhung der Festigkeit der Schachtabdeckung umfasst. Ein Vorteil hiervon ist, dass die maximale Traglast der Schachtabdeckung erhöht wird. Zudem wird das Gewicht der Schachtabdeckung hierdurch weiter reduziert. Die länglichen Füllstoffe und/oder Fasern können im Wesentlichen parallel zu den Kraftverteilungsrippen ausgerichtet sein. Hierdurch wird eine bessere Kraftverteilung bzw. Kraftableitung in der Schachtabdeckung erreicht. Die Traglast der Schachtabdeckung wird hierdurch zudem weiter erhöht.

Die Schachtabdeckung und/oder die Kraftverteilungsplatte kann eine im Wesentlichen runde, insbesondere kreisförmige, Außenform aufweisen. Bei dieser Außenform ist die Kraftverteilung bzw. Kraftableitung besonders vorteilhaft.

Alternativ kann die Schachtabdeckung und/oder die Kraftverteilungsplatte eine im Wesentlichen mehreckige, insbesondere eine rechteckige, vorzugsweise eine quadratische, Außenform aufweisen. Ein Vorteil hiervon ist, dass die auftretenden Kräfte besser kanalisiert und abgeleitet werden.

Die Außenform der Schachtabdeckung kann im Wesentlichen der Außenform der Kraftverteilungsplatte entsprechen. Vorteilhaft hieran ist, dass die in der Kraftverteilungsplatte auftretenden Kräfte gleichmäßig aus der Schachtabdeckung abgeleitet werden können.

In einer weiteren Ausführungsform verlaufen die Kraftverteilungsrippen im Wesentlichen radial. Hierdurch wird eine besonders gute Verteilung der auftretenden Kräfte gewährleistet.

Alternativ können die Kraftverteilungsrippen im Wesentlichen parallel zueinander verlaufen. Ein Vorteil hiervon ist, dass auftretende Kräfte in eine Richtung auf mehrere Kraftverteilungsrippen verteilt werden. Eine einzelne Kraftverteilungsrippe muss somit weniger stabil ausgebildet sein.

In einer weiteren Ausführungsform ist eine Deckelplatte mindestens einen wesentlichen Teil der Deckfläche bildend auf der Oberseite der Tragstrukturvorrichtung anordenbar. Hierdurch kann der Schacht technisch einfach verschlossen werden.

In einer weiteren Ausführungsform umfasst die Schachtabdeckung eine mindestens einen wesentlichen Teil der Deckfläche bildende Deckelplatte auf der Oberseite der Schachtabdeckung, wobei die Deckelplatte einstückig mit der Schachtabdeckung ausgebildet ist. Hierdurch sinkt der Handhabungsaufwand am Installationsort und somit die benötigte Zeit zum Installieren.

In einer weiteren Ausführungsform gabelt sich zumindest ein Teil der Kraftverteilungsrippen in Richtung von der Kraftverteilungsplatte weg auf. Vorteilhaft hieran ist, dass am äußeren Rand der Tragstrukturvorrichtung der Abstand zwischen den (aufgegabelten) Kraftverteilungsrippen geringer ist und somit die auftretenden Kräfte noch gleichmäßiger verteilt werden. Zudem müssen die aufgegabelten Rippen am Rand weniger stabil ausgebildet sein, da die auftretenden Kräfte auf mehr Rippen verteilt werden.

Die Aufgabe wird auch durch ein Verfahren zum Herstellen einer Schachtabdeckung mit einer Tragstrukturvorrichtung umfassend eine Kraftverteilungsplatte, die einen Kraftverteilungszylinder zur Abstützung von Kraftverteilungsrippen entlastet, gelöst, wobei längliche Füllstoffe, insbesondere längliche Fasern, in das Herstellungsmaterial der Schachtabdeckung eingebracht werden, und zuerst die Kraftverteilungsplatte und anschließend die Kraftverteilungsrippen von innen nach außen spritzgegossen und/oder gepresst werden, um die länglichen Füllstoffe parallel zu den Kraftverteilungsrippen auszurichten. Durch dieses Verfahren wird technisch einfach eine Schachtabdeckung mit hoher Traglast hergestellt. Zudem wird bei der durch dieses Verfahren hergestellten Schachtabdeckung aufgrund der Ausrichtung der länglichen Füllstoffe eine bessere Kraftverteilung in der Schachtabdeckung sowie eine bessere Kraftableitung aus der Schachtabdeckung erreicht.

Bevorzugte Ausführungsformen ergeben sich aus den Unteransprüchen. Nachfolgend wird die Erfindung anhand von Zeichnungen von Ausführungsbeispielen näher erläutert. Hierbei zeigen
- Fig. 1: eine Ansicht einer Ausführungsform der erfindungsgemäßen Schachtabdeckung mit Tragstrukturvorrichtung von unten;
- Fig. 2: eine Aufsicht auf die Schachtabdeckung mit Tragstrukturvorrichtung aus Fig. 1;
- Fig. 3: eine schematische Seiten-/Querschnittsansicht der Schachtabdeckung mit Tragstrukturvorrichtung aus Fig. 1 bzw. Fig. 2; und
- Fig. 4: eine schematische Seiten-/Querschnittsansicht der Schachtabdeckung mit Tragstrukturvorrichtung aus Fig. 3 mit einer Deckelplatte.

Bei der nachfolgenden Beschreibung werden für gleiche und gleich wirkende Teile dieselben Bezugsziffern verwendet.

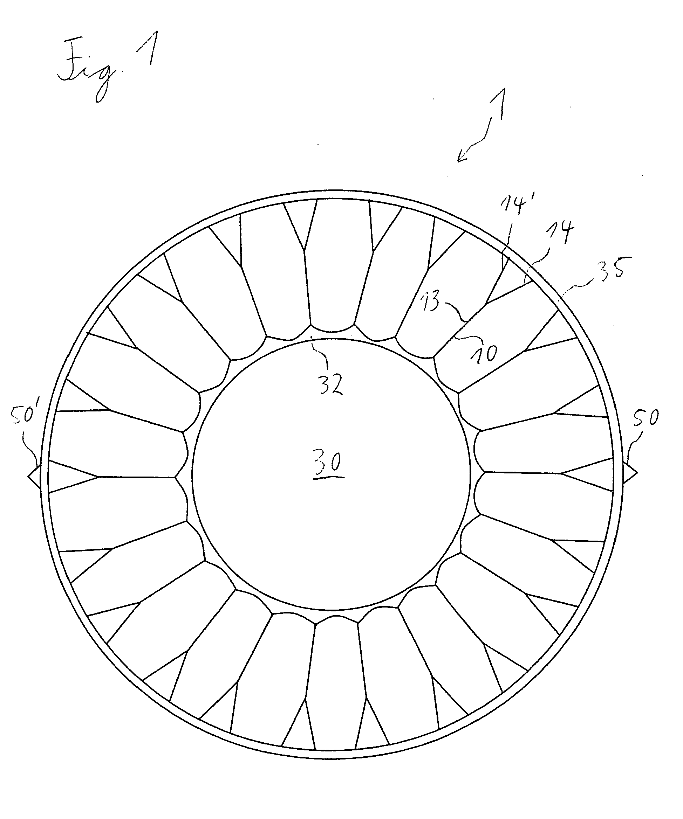

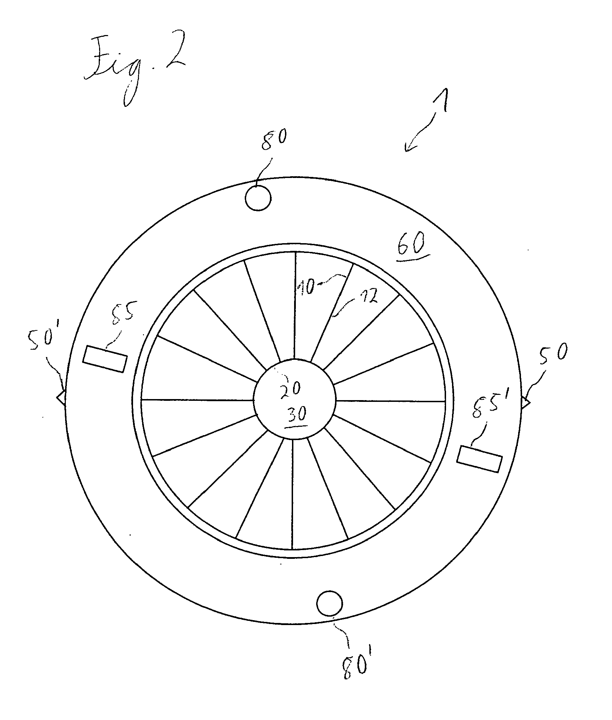

Fig. 1 zeigt eine Sicht von unten auf eine Ausführungsform der erfindungsgemäßen Schachtabdeckung 1 mit Tragstrukturvorrichtung. Fig. 2 zeigt eine Aufsicht auf die gleiche Ausführungsform der Schachtabdeckung 1 mit Tragstrukturvorrichtung aus Fig. 1. Die Schachtabdeckung 1 deckt beispielsweise einen Abwasserschacht ab. Insbesondere in stark befahrenen Einbaubereichen beispielsweise einem Abwasserschacht in der Straße muss der Schacht mittels einer Schachtabdeckung abgedeckt werden, die eine hohe Tragkraft aufweist. Die Tragstrukturvorrichtung ist der Teil, der die Schachtabdeckung 1 im Wesentlichen trägt. Die Deckfläche 90 der Schachtabdeckung 1, d.h. die Oberfläche der Schachtabdeckung 1, die im Gebrauch nach oben zeigt, ist zum Überfahren durch z.B. PKW, LKW ausgebildet. Der Begriff "Deckfläche 90" in Bezug auf die Schachtabdeckung 1 ist nicht im streng geometrischen Sinne, d.h. als Begrenzung eines geometrischen Zylinders, zu verstehen.

Die Schachtabdeckung 1 bzw. die Tragstrukturvorrichtung der Schachtabdeckung 1 umfasst radial verlaufende Kraftverteilungsrippen 10 auf der Unterseite der Schachtabdeckung 1. Die Kraftverteilungsrippen 10 verlaufen ausgehend von einem Kraftverteilungszylinder 20, der mittig angeordnet ist, strahlenförmig nach außen. Die Kraftverteilungsrippen 10 verlaufen strahlenförmig in gleichgroßen Abständen zueinander radial von dem Kraftverteilungszylinder 20 nach außen. Die Anzahl der Kraftverteilungsrippen 10 ist vorzugsweise 24. Eine größere oder kleinere Anzahl von Kraftverteilungsrippen 10 ist vorstellbar. Die Anzahl der Kraftverteilungsrippen 10 in der in den Figuren gezeigten Ausführungsform beträgt 22.

Der Kraftverteilungszylinder 20 ist hohl und weist vorzugsweise weder eine Grundfläche noch eine Deckfläche (im geometrischen Sinne) auf. Der hohle Kraftverteilungszylinder 20 besteht somit nur aus dem Mantel eines Zylinders. Ebenfalls vorstellbar ist, dass der Kraftverteilungszylinder 20 nicht hohl, sondern massiv ausgebildet ist. In diesem Fall weist der Kraftverteilungszylinder 20 eine Grund- und Deckfläche (im geometrischen Sinne) auf.

Der Kraftverteilungszylinder 20 hat vorzugsweise die Form eines geraden Kreiszylinders. Vorstellbar ist jedoch auch, dass der Kraftverteilungszylinder 20 ein schiefer Zylinder ist.

Denkbar ist des Weiteren, dass der Kraftverteilungszylinder 20 allein dadurch gebildet wird, dass mehrere Kraftverteilungsrippen an einer Stelle aufeinandertreffen. Der Kraftverteilungszylinder 20 ist in diesem Fall vorzugsweise ein Vieleck entsprechend der Anzahl der Kraftverteilungsrippen. Bei 12 Kraftverteilungsrippen, die an einer Stelle aufeinandertreffen, hat der Kraftverteilungszylinder ein 12-Eck als Basisform bzw. als Form der Grund- und Deckfläche (im geometrischen Sinne). Die Außenbegrenzung des Kraftverteilungszylinders ist in diesem Falle dadurch bestimmt, an welcher Stelle die Kraftverteilungsrippen in eine geschlossen Fläche übergehen bzw. an welcher Stelle von voneinander getrennten Kraftverteilungsrippen gesprochen werden kann. In einem solchen Falle ist der Kraftverteilungszylinder vorzugsweise massiv. Vorstellbar ist jedoch auch, dass in dem Fall, bei dem der Kraftverteilungszylinder alleine dadurch gebildet wird, dass mehrere Kraftverteilungsrippen an einer Stelle aufeinandertreffen, der Kraftverteilungszylinder hohl ist.

Der Kraftverteilungszylinder 20 kann insbesondere ein Kraftverteilungskreiszylinder sein. Andere Grundformen des Kraftverteilungszylinders 20, d.h. andere Formen der (physisch nicht vorhandenen) Grund- bzw. Deckfläche (im geometrischen Sinne) des Kraftverteilungszylinders 20, wie beispielsweise elliptisch oder rechteckig, sind vorstellbar. Insbesondere kann der Kraftverteilungszylinder 20 auch ein (regelmäßiges) Vieleck, z.B. ein 24-Eck, als Basisform der (physisch nicht vorhandenen) Grund- bzw. Deckfläche (im geometrischen Sinne) haben. Im Stand der Technik wird der Kraftverteilungszylinder 20 auch als Kraftverteilungsring bezeichnet.

Die Schachtabdeckung 1 bzw. die Tragstrukturvorrichtung der Schachtabdeckung 1 umfasst des Weiteren eine Kraftverteilungsplatte 30. Die Kraftverteilungsplatte 30 ist in den in den Figuren 1-4 gezeigten Ausführungsbeispielen (bis auf den äußeren Ring 32) im Wesentlichen kreisförmig. Vorstellbar ist jedoch auch, dass die Kraftverteilungsplatte 30 mehreckig, insbesondere rechteckig oder quadratisch, oder ellipsenförmig ausgebildet ist.

Die Kraftverteilungsplatte 30 bedeckt die Unterseite des Kraftverteilungszylinders 20. Dies bedeutet jedoch nicht, dass die Kraftverteilungsplatte 30 notwendigerweise den Kraftverteilungszylinder 20 berührt. Der Kraftverteilungszylinder kann in direktem Kontakt zur Kraftverteilungsplatte 30 stehen oder einen Abstand zu der Kraftverteilungsplatte 30 aufweisen. Die Kraftverteilungsplatte 30 befindet sich demnach in Bezug auf den Kraftverteilungszylinder 20 auf der der Deckfläche 90 entgegen gesetzten Seite. Die Kraftverteilungsplatte 30 kann auch größer als der Kraftverteilungszylinder 20 bzw. als die Unterseite des Kraftverteilungszylinders 20 sein.

Die Dicke der Kraftverteilungsplatte 30 kann bei der Herstellung der gewünschten Belastbarkeit der fertigen Schachtabdeckung angepasst werden.

Bei einer rechteckigen (nichtquadratischen) Außenform der Schachtabdeckung 1 verlaufen die Kraftverteilungsrippen 10 vorzugsweise parallel zueinander. Bei einer quadratischen oder vieleckigen Außenform, d.h. einer Außenform mit mehr als vier Ecken, der Schachtabdeckung 1 verlaufen die Kraftverteilungsrippen 10 vorzugsweise radial von dem Kraftverteilungszylinder 20 ausgehend. Grundsätzlich können die Kraftverteilungsrippen 10 unabhängig von der Außenform der Schachtabdeckung 1 oder der Außenform der Kraftverteilungsplatte 30 radial oder parallel zueinander verlaufen.

Die Kraftverteilungsplatte 30 umfasst einen kreisringförmigen äußeren Ring 32. In dem Bereich des äußeren Rings 32 gehen die Kraftverteilungsrippen 10, bzw. der untere Teil der Kraftverteilungsrippen 10, in die Kraftverteilungsplatte 30 fließend über. Das heißt, dass die Kraftverteilungsrippen 10 bzw. ihr unterer Teil im Bereich des äußeren inneren Rings 32 der Kraftverteilungsplatte 30 in die Kraftverteilungsplatte 30 münden. Es bestehen somit im Wesentlichen keine nahezu rechtwinkligen Kanten, an denen sehr hohe Belastungskräfte auftreten. Die Kraftverteilungsrippen 10 gehen insbesondere am unteren Teil der Kraftverteilungsrippe 10 in die Kraftverteilungsplatte 30 fließend über. Ein Teil bzw. der obere Teil der Kraftverteilungsrippen 10 verläuft oberhalb der Kraftverteilungsplatte 30 und ist mit dem Kraftverteilungszylinder 20 verbunden.

Bei anderen Außenformen der Kraftverteilungsplatte 30 weist der äußere Ring 32 dementsprechend ebenfalls eine entsprechende andere Form auf.

Der äußere Ring 32 der Kraftverteilungsplatte 30 weist U-förmige Ausbuchtungen zwischen den Stellen auf, an denen die Kraftverteilungsrippen 10 in direktem Kontakt mit der Kraftverteilungsplatte 30 bzw. dem äußeren Ring 32 der Kraftverteilungsplatte 32 stehen. Anders gesagt weiten sich die Kraftverteilungsrippen 10 bzw. der untere Teil der Kraftverteilungsrippen 10 in Richtung der Kraftverteilungsplatte 30 im Bereich des äußeren Rings 32 der Kraftverteilungsplatte 30 immer mehr auf bis sie eine geschlossene Fläche, nämlich die Kraftverteilungsplatte 30, bilden. Der untere bzw. unterste Teil der Kraftverteilungsrippen 10 wird sozusagen immer breiter bis alle Kraftverteilungsrippen 10 eine einzige zusammenhängende Fläche bilden. Diese zusammenhänge Fläche ist der äußere Ring 32 der Kraftverteilungsplatte 30 bzw. die Kraftverteilungsplatte 30 selbst.

Ein kreisringförmiger Außenrahmen 35 verläuft in der Nähe des Außenumfangs der Schachtabdeckung 1 bzw. der Tragstrukturvorrichtung der Schachtabdeckung 1. Die Kraftverteilungsrippen 10 enden am Außenrahm 35. Die Kraftverteilungsrippen 10 sind mit diesem Außenrahmen 35 verbunden. Die Form des Außenrahmens 35 wird im Wesentlichen durch die Außenumfangsform der Schachtabdeckung 1 bzw. der Oberfläche der Schachtabdeckung 1 bestimmt. Bei einer anderen Form der Schachtabdeckung 1 weist der Außenrahmen 35 eine entsprechend andere Form auf.

Die Kraftverteilungsrippen 10 gabeln sich nach ungefähr drei Viertel des Weges vom äußeren Ring 32 der Kraftverteilungsplatte 30 zum Außenrahmen 35 in jeweils zwei Kraftverteilungsrippen 14, 14' auf. Vorstellbar ist auch, dass nur ein Teil der Kraftverteilungsrippen 10 sich aufgabelt. Ebenfalls vorstellbar ist, dass sich die Kraftverteilungsrippen 10 an einer Stelle, die näher an dem äußeren Ring 32 der Kraftverteilungsplatte 30 oder näher am Außenrahmen 35 angeordnet ist, aufgabeln. Durch die Aufgabelung der Kraftverteilungsrippen 10 werden die auftretenden Kräfte noch besser am bzw. in den Außenrahmen 35 verteilt. Es ist auch denkbar, dass sich die Krafterteilungsrippen 10 in mehr als zwei Kraftverteilungsrippen aufgabelt, beispielsweise in drei, vier oder mehr aufgegabelte Kraftverteilungsrippen. Je größer die Anzahl der aufgegabelten Kraftverteilungsrippen ist, in die sich eine Kraftverteilungsrippe aufgabelt, je geringer ist der Abstand der aufgegabelten Kraftverteilungsrippen zueinander. Somit wird die Kraft mit steigender Anzahl der aufgegabelten Kraftverteilungsrippen gleichmäßiger am Außenrand verteilt und die einzelne aufgegabelte Kraftverteilungsrippen muss weniger großen Belastungskräften standhalten und somit weniger stabil ausgebildet sein.

Die Kraftverteilungsrippen 10 verlaufen im Wesentlichen senkrecht zu der oberen Oberfläche der Schachtabdeckung 1. Die Höhe der Kraftverteilungsrippen 10 bzw. der aufgegabelten Kraftverteilungsrippen 14, 14' nimmt von dem Kraftverteilungszylinder 20 bzw. dem äußeren Ring 32 der Kraftverteilungsplatte 30 zu dem Außenrahmen 35 kontinuierlich ab. Die Breite der Kraftverteilungsrippen 10 bzw. der aufgegabelten Kraftverteilungsrippen 14, 14' ist an allen Stellen im Wesentlichen konstant. Vorstellbar ist auch, dass die Breite zu- oder abnimmt.

Ein Teil der Oberfläche der Schachtabdeckung 1 bildet eine geschlossene Fläche 60. Der offene Teil der Oberfläche der Schachtabdeckung 1 entspricht von seiner Größe und (horizontalen) Position in etwa der Größe und (horizontalen) Position der Kraftverteilungsplatte 30. Aus diesem Grund sieht man in er Sicht von unten in Fig. 1 nur die Kraftverteilungsplatte 30 und die geschlossene Oberfläche 60 der Schachtabdeckung 1.

Vorstellbar ist auch, dass der offene Teil der Oberfläche der Schachtabdeckung 1 größer oder kleiner als die Kraftverteilungsplatte 30 ist oder horizontal zu dieser versetzt ist. Die Kraftverteilungsplatte 30 verläuft im Wesentlichen parallel zu der Oberfläche der Schachtabdeckung 1.

Ebenfalls vorstellbar ist, dass die obere Oberfläche der Schachtabdeckung 1 komplett offen oder komplett geschlossen ist.

Die Schachtabdeckung 1 mit Tragstrukturvorrichtung weist am inneren Umfang der geschlossenen Oberfläche 60 eine Nut 45 auf. Diese umlaufende Nut 45 dient zur Befestigung einer Deckelplatte 70, die auf der Schachtabdeckung 1 angeordnet werden kann.

In der geschlossenen Oberfläche 60 der Schachtabdeckung 1 sind zwei diametral gegenüberliegende Aushebeöffnungen 85, 85' ausgebildet. Diese dienen dazu, die Schachtabdeckung 1 leicht anheben zu können, insbesondere um die Schachtabdeckung 1 aus dem Schacht zu entfernen bzw. in diesen einzubringen. Vorstellbar ist, dass die Aushebeöffnungen 85, 85' mittels eines (Plastik-)Schutzes vor Staub und Dreck geschützt sind.

Zudem sind zwei diametral gegenüberliegende Aufnahmen 80, 80' für Vorspannungseinrichtungen eines O-Rings in der geschlossenen Oberfläche 60 vorgesehen. Der O-Ring (nicht gezeigt) dient zur Abdichtung zwischen der Schachtabdeckung 1 und der Oberfläche, auf der die Schachtabdeckung gelagert wird.

Die Schachtabdeckung 1 weist zudem zwei dreieckige Ausrichtungselemente 50, 50' auf, die an zwei gegenüberliegenden Stellen am Umfang der Schachtabdeckung 1 angeordnet sind. Sie dienen dazu, die kreisförmige Schachtabdeckung 1 entsprechend auszurichten. Andere Formen der Ausrichtungselemente 50, 50', z.B. rechteckig oder ellipsenförmig bzw. kreisförmig, sind vorstellbar.

Die Kraftverteilungsrippen 10 sind vorzugsweise einstückig mit der Kraftverteilungsplatte 30 ausgebildet bzw. einstückig miteinander verbunden. Zusätzlich oder alternativ kann die Kraftverteilungsplatte 30 mit dem Kraftverteilungszylinder 20 einstückig ausgebildet sein bzw. einstückig miteinander verbunden sein. Darüber hinaus können alternativ oder zusätzlich die Kraftverteilungsrippen 10 und der Kraftverteilungszylinder 20 einstückig ausgebildet bzw. einstückig miteinander verbunden sein. Vorzugsweise sind alle drei genannten Elemente, d.h. die Kraftverteilungsrippen 10, der Kraftverteilungszylinder 20 und die Kraftverteilungsplatte 30, miteinander einstückig ausgebildet bzw. einstückig miteinander verbunden. Ebenfalls alternativ oder zusätzlich können die Kraftverteilungsrippen 10 mit dem Außenrahmen 35 einstückig ausgebildet sein.

Das Material, aus dem die Schachtabdeckung 1 mit einer Tragstrukturvorrichtung bzw. die Tragstrukturvorrichtung besteht, kann insbesondere einen Kunststoff, wie z.B. Polypropylen, und/oder Metall umfassen. Vorzugsweise besteht die Schachtabdeckung 1 vollständig aus einem Kunststoff oder einem Kunststoff-Verbundwerkstoff.

Den verwendeten Werkstoffen können längliche Füllstoffe, z.B. Fasern, beigemischt sein, um die Festigkeitseigenschaften der Tragstrukturvorrichtung bzw. der Schachtabdeckung 1 bei verringertem Materialeinsatz (und damit geringerem Gewicht) beizubehalten. Es ist vorteilhaft, die länglichen Füllstoffe bei der Herstellung der Schachtabdeckung 1 bzw. Tragstrukturvorrichtung der Schachtabdeckung 1 im Wesentlichen parallel zu den Kraftverteilungsrippen 10 auszurichten. Durch diese Ausbildung können die Festigkeitseigenschaften der Schachtabdeckung 1 weiter verbessert werden und es kann zusätzliches Material eingespart werden, um eine ausreichend tragfähige Schachtabdeckung 1 zu erhalten. Die Faserausrichtung wird vorzugsweise dadurch erreicht, dass das Herstellungsmaterial mit den Fasern in die Kraftverteilungsplatte 30 eingebracht wird und dieses Material radial von innen nach außen in die Kraftverteilungsrippen 10 drängt (beispielsweise beim Spritzgießen oder Pressen).

Die Kraftverteilungsplatte 30 weist vorzugsweise eine Dicke auf, die im Wesentlichen der Wandstärke des Kraftverteilungszylinders 20 entspricht. Vorstellbar ist auch, dass die Kraftverteilungsplatte 30 eine größere oder geringere Dicke als die Wände des Kraftverteilungszylinders 20 aufweist.

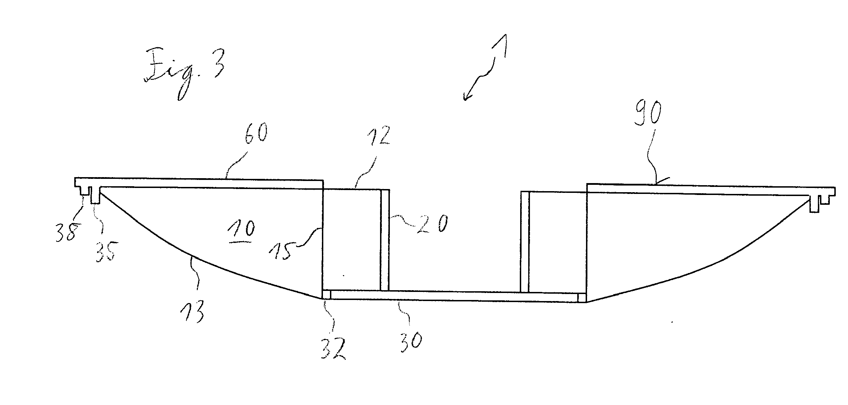

Fig. 3 zeigt eine Seiten-/Querschnittsansicht der Schachtabdeckung 1 mit einer Tragstrukturvorrichtung aus der Fig. 1 bzw. der Fig. 2. Die Kraftverteilungsrippen 10, die zwischen dem Außenrahmen 35 und dem Kraftverteilungszylinder 20 bzw. der Kraftverteilungsplatte 30 verlaufen, weisen einen inneren Teil 12 und einen äußeren Teil 13 auf. Der innere Teil 12 der Kraftverteilungsrippen 10 verläuft ausgehend von dem Kraftverteilungszylinder 20 oberhalb der Kraftverteilungsplatte 30 in Richtung des Außenrahmens 35. Der innere Teil 12 der Kraftverteilungsrippen 10 endet in etwa über dem äußeren Ring 32 der Kraftverteilungsplatte 30. Das heißt, dass der äußere Ring 32 in etwa den gleichen radialen Abstand von der Mitte der Schachtabdeckung aufweist wie das äußere Ende des inneren Teils 12 der Kraftverteilungsrippen 10.

Der äußere Teil 13 der Kraftverteilungsrippen 10 ist der Teil der Kraftverteilungsrippen 10, der sich von dem Außenrahmen 35 bis zu dem radialen Abstand von der Mitte der Schachtabdeckung 1 erstreckt, der dem radialen Abstand des äußeren Rings 32 der Kraftverteilungsplatte 30 entspricht.

Vorstellbar ist auch, dass der innere Teil 12 sich weiter nach außen erstreckt, oder dass der äußere Teil 13 der Kraftverteilungsrippen 10 sich weiter nach innen erstreckt. Zwischen dem inneren Teil 12 der Kraftverteilungsrippen 10 und dem äußeren Teil 13 der Kraftverteilungsrippen 10 kann eine Dünnhaut 15 angeordnet sein. Die Dünnhaut 15 kann insbesondere luftdicht ausgebildet sein. Die Dünnhaut 15 verläuft im Wesentlichen senkrecht zwischen dem inneren Teil 12 und dem äußeren Teil 13 von jeweils zwei Kraftverteilungsrippen 10. Das heißt, dass die Dünnhaut 15 zwischen jeweils zwei Kraftverteilungsrippen 10 aufgespannt ist. Die Höhe der Dünnhaut 15 entspricht im Wesentlichen der Höhe des Kraftverteilungszylinders 20. Das untere Ende der Dünnhaut 15 befindet sich in direktem Kontakt zum äußeren Ring 32 der Kraftverteilungsplatte 30 oder der Kraftverteilungsplatte 30 selbst.

Auf diese Weise wird im Gebrauch der Teil der Oberfläche der Schachtabdeckung 1, der nicht geschlossen ist, vom unteren Teil des Schachts getrennt, der sich unterhalb der Schachtabdeckung 1 befindet. Falls die Schachtabdeckung 1 mittels des Abdichtungsrings 38 auch auf der Auflagerungsfläche luftdicht gelagert ist, beispielsweise durch einen O-Ring zwischen Abdichtungsring 38 und Auflagefläche, und der Kraftverteilungszylinder 20 in direktem Kontakt mit der Kraftverteilungsplatte 30 steht bzw. mit der Kraftverteilungsplatte 30 einstückig ausgebildet ist, wird hierdurch ein luftdichter Verschluss des Schachtes erreicht.

Die Kraftverteilungsrippen 10 sind vorzugsweise einstückig ausgebildet, d.h. der innere 12 Teil der Kraftverteilungsrippen 10 ist einstückig mit dem äußeren Teil 13 der Kraftverteilungsrippen 10 einstückig ausgebildet.

Außerhalb des Außenrahmens 35, der durch einen Vorsprung nach unten gebildet wird, befindet sich ein Abdichtungsring 38. Die Form des Außenrahmens 35 und die Form des Abdichtungsrings 38 entspricht im Wesentlichen der Außenform der Schachtabdeckung 1. Das heißt, dass bei einer im Wesentlichen kreisförmigen Außenform der Schachtabdeckung 1 der Außenrahmen 35 und der Abdichtungsring 38 jeweils kreisringförmig sind. Bei einer rechteckigen Außenform der Schachtabdeckung 1 ist der Außenrahmen 35 und der Abdichtungsring 38 ebenfalls rechteckig.

Der Abdichtungsring 38 besteht aus einem Vorsprung mit einer geringeren Höhe als der Außenrahmen 35 zur Auflagerung der Schachtabdeckung 1. Das heißt, dass der Vorsprung des Außenrahmens 35 weiter nach unten heraussteht als der Vorsprung des Abdichtungsrings 38. Der Abdichtungsring 38 und/oder der Außenrahmen 35 kann einstückig mit der geschlossen Oberfläche 60 der Schachtabdeckung 1 ausgebildet sein.

Zwischen dem Abdichtungsring 38 und der Fläche, auf der die Schachtabdeckung 1 aufgelagert wird, kann eine Gummidichtung, wie z.B. ein O-Ring, angeordnet sein. Dies führt zu einer luftdichten Abdichtung am Rand der Schachtabdeckung 1. Zudem wird hierdurch ein Scheppern der Schachtabdeckung bei Überfahren der Schachtabdeckung im Wesentlichen verhindert.

Die Auflagerungsfläche ist beispielsweise ein Betonring mit hervorstehendem Innenrand. Die Schachtabdeckung 1 ruht dann mit dem Außenrahmen 35 auf dem Innenrand des Betonrings.

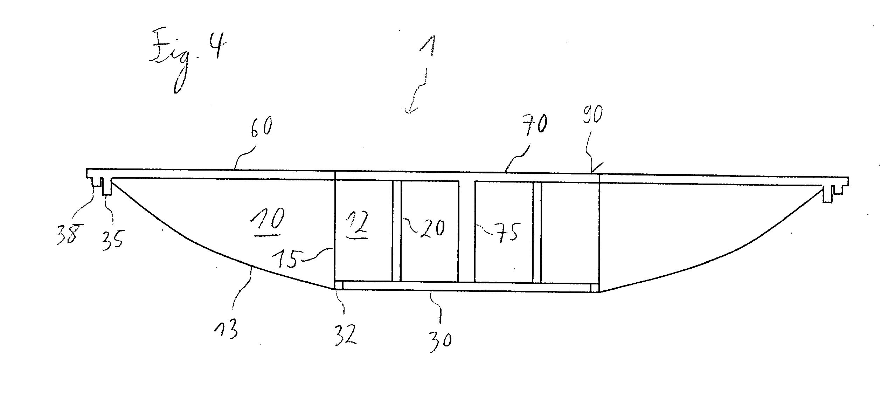

Fig. 4 zeigt eine weitere Seiten-/Querschnittsansicht der Schachtabdeckung 1 aus Fig. 3. Auf der Schachtabdeckung 1 ist eine Deckelplatte 70 angeordnet. Die Deckelplatte 70 umfasst ein Abstützungselement 75, das mittig die Deckelplatte 70 abstützt. Das Abstützungselement 75 ruht auf der Oberseite der Kraftverteilungsplatte 30. Die Deckelplatte 70 verschließt den bisher nicht verschlossenen Teil 60 der Oberfläche der Schachtabdeckung 1. Die Deckelplatte 70 schließt plan mit der geschlossenen Oberfläche 60 der Schachtabdeckung 1 ab. Die Deckelplatte 70 kann geschlossen sein oder eine oder mehrere Öffnungen aufweisen.

Die Deckelplatte 70 bildet zumindest einen wesentlichen Teil der Deckfläche 90 der Schachtabdeckung 1. Die Deckfläche 90 besteht somit bei der gezeigten Ausführungsform aus der geschlossenen Oberfläche 60 der Schachtabdeckung 1 und der Deckelplatte 70 bzw. der Oberseite der Deckelplatte 70. Die Schachtabdeckung 1 wird vorzugsweise derart in dem Schacht angeordnet, dass die Deckfläche 90 der Schachtabdeckung 1 plan mit der umgebenden Fläche liegt bzw. plan mit dieser abschließt. Somit gibt es keine Kante beim Übergang der umgebenden Fläche und der Deckfläche 90 der Schachtabdeckung 1.

### Bezugzeichenliste:

- 1: Schachtabdeckung
- 10: Kraftverteilungsrippen
- 12: innerer Teil der Kraftverteilungsrippen
- 13: äußerer Teil der Kraftverteilungsrippen
- 14, 14': aufgegabelte Kraftverteilungsrippen
- 15: Dünnhaut
- 20: Kraftverteilungszylinder
- 30: Kraftverteilungsplatte
- 32: Äußerer Ring der Kraftverteilungsplatte
- 35: Außenrahmen
- 38: Abdichtungsring
- 45: Nut
- 50, 50': Ausrichtungselemente
- 60: geschlossene Oberfläche der Schachtabdeckung
- 70: Deckelplatte
- 75: Abstützungselement der Deckelplatte
- 80, 80': Aufnahmen für Vorspannungseinrichtungen des O-Rings
- 85, 85': Aushebeöffnungen
- 90: Deckfläche

## Patentansprüche

1. Schachtabdeckung (1) mit einer Tragstrukturvorrichtung umfassend Kraftverteilungsrippen (10) zum Tragen einer überfahrbaren Deckfläche (90) der Schachtabdeckung (1), und
einen im Wesentlichen mittig angeordneten, vorzugsweise hohlen, Kraftverteilungszylinder (20), insbesondere Kraftverteilungskreiszylinder, zur Abstützung der Kraftverteilungsrippen (10),
**gekennzeichnet durch**
eine Kraftverteilungsplatte (30) zur Entlastung des Kraftverteilungszylinders (20), wobei die Kraftverteilungsplatte (30) eine Unterseite des Kraftverteilungszylinders (20) gegenüber der Deckfläche (90) mindestens im Wesentlichen vollständig bedeckt, und wobei die Kraftverteilungsrippen (10) in die Kraftverteilungsplatte (30) fließend übergehen.

2. Schachtabdeckung (1) nach Anspruch 1, **dadurch gekennzeichnet, dass** zwei oder mehrere der nachfolgenden Teile einstückig miteinander verbunden sind, nämlich die Kraftverteilungsrippen (10), die Kraftverteilungsplatte (30) und der Kraftverteilungszylinder (20).

3. Schachtabdeckung (1) nach einem der vorhergehenden Ansprüche,
**gekennzeichnet durch**
einen, insbesondere kreisringförmigen, Außenrahmen (35) zum Auflagern der Schachtabdeckung (1) auf einem Untergrund, wobei der Außenrahmen (35) im Wesentlichen entlang des Außenumfangs der Schachtabdeckung (1) verläuft.

4. Schachtabdeckung (1) nach einem der vorhergehenden Ansprüche, insbesondere nach Anspruch 3, **dadurch gekennzeichnet, dass** der Außenrahmen (35) mit den Kraftverteilungsrippen (10) einstückig ausgebildet ist.

5. Schachtabdeckung (1) nach einem der vorhergehenden Ansprüche,
**dadurch gekennzeichnet, dass**
die Schachtabdeckung aus einem Material besteht, das längliche Füllstoffe und/oder Fasern zur Erhöhung der Festigkeit der Schachtabdeckung umfasst.

6. Schachtabdeckung (1) nach einem der vorhergehenden Ansprüche, insbesondere nach Anspruch 5, **dadurch gekennzeichnet, dass** die länglichen Füllstoffe und/oder Fasern im Wesentlichen parallel zu den Kraftverteilungsrippen (10) ausgerichtet sind.

7. Schachtabdeckung (1) nach einem der vorhergehenden Ansprüche,
**dadurch gekennzeichnet, dass**
die Schachtabdeckung (1) und/oder die Kraftverteilungsplatte (30) eine im Wesentlichen runde, insbesondere kreisförmige, Außenform aufweisen.

8. Schachtabdeckung (1) nach einem der vorhergehenden Ansprüche, insbesondere nach einem der Ansprüche 1-6, **dadurch gekennzeichnet, dass**
die Schachtabdeckung (1) und/oder die Kraftverteilungsplatte (30) eine im Wesentlichen mehreckige, insbesondere eine rechteckige, vorzugsweise eine quadratische, Außenform aufweisen.

9. Schachtabdeckung (1) nach einem der vorhergehenden Ansprüche,
**dadurch gekennzeichnet, dass**
die Außenform der Schachtabdeckung (1) im Wesentlichen der Außenform der Kraftverteilungsplatte (30) entspricht.

10. Schachtabdeckung (1) nach einem der vorhergehenden Ansprüche,
**dadurch gekennzeichnet, dass**
die Kraftverteilungsrippen (10) im Wesentlichen radial verlaufen.

11. Schachtabdeckung (1) nach einem der vorhergehenden Ansprüche, insbesondere nach einem der Ansprüche 1-9, **dadurch gekennzeichnet, dass**
die Kraftverteilungsrippen (10) im Wesentlichen parallel zueinander verlaufen.

12. Schachtabdeckung (1) nach einem der vorhergehenden Ansprüche,
**dadurch gekennzeichnet, dass**
eine Deckelplatte (70) mindestens einen wesentlichen Teil der Deckfläche (90) bildend auf der Oberseite der Schachtabdeckung (1) anordenbar ist.

13. Schachtabdeckung (1) nach einem der vorhergehenden Ansprüche, insbesondere nach einem der Ansprüche 1-11, **gekennzeichnet durch** eine mindestens einen wesentlichen Teil der Deckfläche (90) bildende Deckelplatte (70) auf der Oberseite der Schachtabdeckung (1), wobei die Deckelplatte (70) einstückig mit der Schachtabdeckung (1) ausgebildet ist.

14. Schachtabdeckung (1) nach einem der vorhergehenden Ansprüche,
**dadurch gekennzeichnet, dass**
zumindest ein Teil der Kraftverteilungsrippen (10) sich in Richtung von der Kraftverteilungsplatte (30) weg aufgabelt.

15. Verfahren zum Herstellen einer Schachtabdeckung (1) mit einer Tragstrukturvorrichtung umfassend eine Kraftverteilungsplatte (30), die einen Kraftverteilungszylinder (20) zur Abstützung von Kraftverteilungsrippen (10) entlastet, wobei
längliche Füllstoffe, insbesondere längliche Fasern, in das Herstellungsmaterial der Schachtabdeckung (1) eingebracht werden, und zuerst die Kraftverteilungsplatte (30) und anschließend die Kraftverteilungsrippen (10) von innen nach außen spritzgegossen und/oder gepresst werden, um die länglichen Füllstoffe parallel zu den Kraftverteilungsrippen (10) auszurichten.

## Claims

1. Manhole cover (1) with a supporting structure device comprising force distribution ribs (10) for supporting a top surface (90) of the manhole cover (1) that can be driven over, and a substantially centrally arranged, preferably hollow, force distribution cylinder (20), in particular a circular force distribution cylinder, for supporting the force distribution ribs (10), **characterized by** a force distribution plate (30) for relieving the load on the force distribution cylinder (20), wherein the force distribution plate (30) at least substantially completely covers an underside of the force distribution cylinder (20) opposite to the top surface (90), and wherein the force distribution ribs (10) merge smoothly into the force distribution plate (30).

2. Manhole cover (1) according to Claim 1, **characterized in that** two or more of the following parts are integrally connected to one another, namely the force distribution ribs (10), the force distribution plate (30) and the force distribution cylinder (20).

3. Manhole cover (1) according to either of the preceding claims, **characterized by** an, in particular circular ring-shaped, outer frame (35) for mounting the manhole cover (1) on an underlying surface, wherein the outer frame (35) extends substantially along the outer circumference of the manhole cover (1).

4. Manhole cover (1) according to one of the preceding claims, in particular according to Claim 3, **characterized in that** the outer frame (35) is integrally formed with the force distribution ribs (10).

5. Manhole cover (1) according to one of the preceding claims, **characterized in that** the manhole cover consists of a material which comprises elongate fillers and/or fibres to increase the strength of the manhole cover.

6. Manhole cover (1) according to one of the preceding claims, in particular according to Claim 5, **characterized in that** the elongate fillers and/or fibres are oriented substantially parallel to the force distribution ribs (10).

7. Manhole cover (1) according to one of the preceding claims, **characterized in that** the manhole cover (1) and/or the force distribution plate (30) have/has a substantially round, in particular circular, external shape.

8. Manhole cover (1) according to one of the preceding claims, in particular according to one of Claims 1-6, **characterized in that** the manhole cover (1) and/or the force distribution plate (30) have/has a substantially polygonal, in particular a rectangular, preferably a square, external shape.

9. Manhole cover (1) according to one of the preceding claims, **characterized in that** the external shape of the manhole cover (1) corresponds substantially to the external shape of the force distribution plate (30).

10. Manhole cover (1) according to one of the preceding claims, **characterized in that** the force distribution ribs (10) extend substantially radially.

11. Manhole cover (1) according to one of the preceding claims, in particular according to one of Claims 1-9, **characterized in that** the force distribution ribs (10) extend substantially parallel to one another.

12. Manhole cover (1) according to one of the preceding claims, **characterized in that** a cover plate (70), forming at least a substantial part of the top surface (90), can be arranged on the upper side of the manhole cover (1).

13. Manhole cover (1) according to one of the preceding claims, in particular according to one of Claims 1-11, **characterized by** a cover plate (70), forming at least a substantial part of the top surface (90), on the upper side of the manhole cover (1), wherein the cover plate (70) is formed integrally with the manhole cover (1).

14. Manhole cover (1) according to one of the preceding claims, **characterized in that** at least some of the force distribution ribs (10) fork into branches in a direction away from the force distribution plate (30).

15. Method for producing a manhole cover (1) with a supporting structure device comprising a force distribution plate (30) which relieves the load on a force distribution cylinder (20) for supporting force distribution ribs (10), wherein elongate fillers, in particular elongate fibres, are introduced into the production material of the manhole cover (1), and first the force distribution plate (30) and then the force distribution ribs (10) are injection-moulded and/or pressed from inside to outside in order to orient the elongate fillers parallel to the force distribution ribs (10).

## Revendications

1. Recouvrement de puits (1) avec un dispositif de structure portante comprenant des nervures de répartition des forces (10) pour porter une face de recouvrement franchissable (90) du recouvrement de puits (1), et
un cylindre de répartition des forces (20), de préférence creux, disposé essentiellement au milieu, en particulier un cylindre circulaire de répartition des forces, pour soutenir les nervures de répartition des forces (10),
**caractérisé par** une plaque de répartition des forces (30) pour soulager le cylindre de répartition des forces (20), dans lequel la plaque de répartition des forces (30) recouvre au moins essentiellement totalement un côté inférieur du cylindre de répartition des forces (20) en face de la plaque de recouvrement (90), et dans lequel les nervures de répartition des forces (10) se prolongent sans discontinuité dans la plaque de répartition des forces (30).

2. Recouvrement de puits (1) selon la revendication 1, **caractérisé en ce que** deux des pièces suivantes, ou plus, sont reliées l'une à l'autre d'un seul tenant, à savoir les nervures de répartition des forces (10), la plaque de répartition des forces (30) et le cylindre de répartition des forces (20).

3. Recouvrement de puits (1) selon l'une quelconque des revendications suivantes, **caractérisé par** un cadre extérieur (35), de préférence de forme annulaire ronde, pour poser le recouvrement de puits (1) sur une base, dans lequel le cadre extérieur (35) s'étend essentiellement le long du pourtour extérieur du recouvrement de puits (1).

4. Recouvrement de puits (1) selon l'une quelconque des revendications précédentes, en particulier selon la revendication 3, **caractérisé en ce que** le cadre extérieur (35) est réalisé d'un seul tenant avec les nervures de répartition des forces (10).

5. Recouvrement de puits (1) selon l'une quelconque des revendications précédentes, **caractérisé en ce que** le recouvrement de puits est composé d'un matériau, qui comprend des matières de remplissage et/ou des fibres allongées pour augmenter la résistance du recouvrement de puits.

6. Recouvrement de puits (1) selon l'une quelconque des revendications précédentes, en particulier selon la revendication 5, **caractérisé en ce que** les matières de remplissage et/ou les fibres allongées sont orientées essentiellement parallèlement aux nervures de répartition des forces (10).

7. Recouvrement de puits (1) selon l'une quelconque des revendications précédentes, **caractérisé en ce que** le recouvrement de puits (1) et/ou la plaque de répartition des forces (30) présentent une forme extérieure essentiellement ronde, en particulier circulaire.

8. Recouvrement de puits (1) selon l'une quelconque des revendications précédentes, en particulier selon une des revendications 1 à 6, **caractérisé en ce que** le recouvrement de puits (1) et/ou la plaque de répartition des forces (30) présentent une forme extérieure essentiellement polygonale, en particulier rectangulaire, de préférence carrée.

9. Recouvrement de puits (1) selon l'une quelconque des revendications précédentes, **caractérisé en ce que** la forme extérieure du recouvrement de puits (1) correspond essentiellement à la forme extérieure de la plaque de répartition des forces (30).

10. Recouvrement de puits (1) selon l'une quelconque des revendications précédentes, **caractérisé en ce que** les nervures de répartition des forces (10) sont essentiellement radiales.

11. Recouvrement de puits (1) selon l'une quelconque des revendications précédentes, en particulier selon une des revendications 1 à 9, **caractérisé en ce que** les nervures de répartition des forces (10) sont essentiellement parallèles l'une à l'autre.

12. Recouvrement de puits (1) selon l'une quelconque des revendications précédentes, **caractérisé en ce qu'**une plaque de couvercle (70) peut être disposée sur le côté supérieur du recouvrement de puits (1) en formant au moins une partie importante de la face de recouvrement (90).

13. Recouvrement de puits (1) selon l'une quelconque des revendications précédentes, en particulier selon une des revendications 1 à 11, **caractérisé par** une plaque de couvercle (70) formant au moins une partie importante de la face de recouvrement (90) sur le côté supérieur du recouvrement de puits (1), dans lequel la plaque de couvercle (70) est réalisée d'un seul tenant avec le recouvrement de puits (1).

14. Recouvrement de puits (1) selon l'une quelconque des revendications précédentes, **caractérisé en ce qu'**au moins une partie des nervures de répartition des forces (10) s'étoilent à partir de la plaque de répartition des forces (30).

15. Procédé de fabrication d'un recouvrement de puits (1) avec un dispositif de structure portante comprenant une plaque de répartition des forces (30), qui soulage un cylindre de répartition des forces (20) pour le soutien de nervures de répartition des forces (10), dans lequel on introduit dans le matériau de fabrication du recouvrement de puits (1) des matières de remplissage allongées, en particulier des fibres allongées, et on moule par injection et/ou on presse de l'intérieur vers l'extérieur d'abord la plaque de répartition des forces (30) et ensuite les nervures de répartition des forces (10), afin d'orienter les matières de remplissage allongées parallèlement aux nervures de répartition des forces (10).
